# EUROPÄISCHE PATENTSCHRIFT

(11) **EP 0 609 708 B1**
(45) Veröffentlichungstag und Bekanntmachung des Hinweises auf die Patenterteilung: **11.09.1996**
(21) Anmeldenummer: 94100756.9
(22) Anmeldetag: 20.01.1994
(51) Int. Cl.: B60J 3/02

(54) **Gegenlagerböckchen für Fahrzeugsonnenblenden**
Bracket for vehicular sun visor
Palier de pivotement pour pare-soleil de véhicule

(30) Priorität: 03.02.1993 DE 4302919
(43) Veröffentlichungstag der Anmeldung: 10.08.1994
(73) Patentinhaber: GEBR. HAPPICH GmbH, D-42285 Wuppertal (DE)
(72) Erfinder: Renahy, Xavier, FR-70800 Conflans/Lanterne (FR); Storck, Patrick, FR-7000 Echenoz La Meline (FR); Henneguet, Jean Pascal, FR-Briaucourt (FR); Vilquin, Philippe, FR-70300 Luxeuil les Bains (FR)

(56) Entgegenhaltungen:
- EP-A- 0 005 146
- DE-A- 3 021 957
- DE-C- 2 803 731

## Beschreibung

Die Erfindung betrifft ein Gegenlagerböckchen für eine Gegenlagerachse einer Fahrzeugsonnenblende mit einem an einer Karosseriefläche befestigbaren Lagerkörper, einem zwischen einem Arm am Lagerkörper und dem Lagerkörner gebildeten Einführungsschlitz für die Gegenlagerachse und einem um eine zum Einführungsschlitz beabstandete Achse zwischen einer Verriegelungs- und Entriegelungsstellung schwenkbaren Verriegelungselement.

Derartige Gegenlagerböckchen dienen für Sonnenblenden, die sowohl klappbar vor der Frontscheibe von Fahrzeugen gelagert sind, als auch über ein Schwenklager zur Seitenscheibe verschwenkt werden können, wobei diese Gegenlagerböckchen die Sonnenblendenachse an dem dem Schwenklager abgewandten Bereich aufnehmen, wenn sich der Sonnenblendenkörper vor der Frontscheibe befindet. Zum Verschwenken zur Seitenscheibe hin wird die Gegenlagerachse aus dem Gegenlagerböckchen herausgezogen und der Sonnenblendenkörper um das Schwenklager herum zur Seitenscheibe hin verschwenkt.

Bei einem in der deutschen Patentschrift DE-A-28 03 731 oder in der EP-A-0 003 233 derselben Anmelderin beschriebenen Gegenlagerböckchen wird die Gegenlagerachse in dem hinterschnittenen Einführungsschlitz durch mindestens eine federelastisch verschwenkbare Federzunge gehalten. Diese Federzunge dient dem Zweck, eine zu große Flächenpressung der die Gegenlagerachse umgebenden Verkleidungsfolie und damit eine Beschädigung derselben beim Herunter- und Heraufklappen des Sonnenblendenkörpers sowie beim Herausziehen und Wiedereinstecken der Gegenlagerachse in das Gegenlagerböckchen zu vermeiden. Die Federzunge gewährleistet des weiteren aufgrund ihrer Federelastizität eine zuverlässige, klapperfreie Halterung der Gegenlagerachse im Gegenlagerböckchen. Für das Material des Böckchens läßt sich ein Werkstoff mit relativ hohem Elastizitätsmodul, der in dem in der Praxis vorkommenden Temperaturbereich geringe Unterschiede zeigt, einsetzen, so daß dieses bekannte Gegenlagerböckchen sowohl bei Kälte als auch bei Wärme eine den technischen Anforderungen vollauf genügende Funktionstüchtigkeit besitzt.

Da indessen die Anforderungen an die Funktion derartiger Fahrzeugausstattungsteile immer höher werden und ein möglichst geringer Unterschied der Einführungs- und Ausziehkraft bei niedrigen und bei hohen Temperaturen gefordert wird, liegt der Erfindung die Aufgabe zugrunde, ein Gegenlagerböckchen zu schaffen, mit dem sich diese Forderungen erfüllen lassen.

ausgehend von dieser Aufgabenstellung wird bei einem Gegenlagerböckchen der eingangs erwähnten Art vorgeschlagen, daß das Verriegelungselement für die Gegenlagerachse um die zum Einführungsschlitz beabstandete Schwenkachse im Lagerkörper schwenkbar gelagert ist und daß am Verriegelungselement ein den Einführungsschlitz in der Verriegelungsstellung wenigstens bereichsweise verschließender, die Gegenlagerachse in der Entriegelungsstellung freigebender Verriegelungsvorsprung vorgesehen ist.

Der Einführungsschlitz weist bei dem erfindungsgemäßen Gegenlagerböckchen keine Hinterschneidung auf, vielmehr wird die Gegenlagerachse durch den Verriegelungsvorsprung am schwenkbaren Verriegelungselement in der Verriegelungsstellung gehalten, während der Verriegelungsvorsprung in der Entriegelungsstellung durch Schwenken des Verriegelungselements die Gegenlagerachse freigibt.

Das Verriegelungselement kann bevorzugterweise eine der Gegenlagerachse angepaßte, entgegengesetzt zur Schwenkachse offene Ausnehmung aufweisen, deren eine Flanke den Verriegelungsvorsprung und deren andere Flanke einen Verriegelungsanschlag bildet. Beim Einführen der Gegenlagerachse in den Aufnahmeschlitz stößt die Gegenlagerachse an den Verriegelungsanschlag und bewirkt ein Umschwenken des Verriegelungselements, so daß der Verriegelungsvorsprung den Einführungsschlitz nunmehr wenigstens bereichsweise verschließt und die Gegenlagerachse klapperfrei im Gegenlagerböckchen hält.

Das Entriegeln läßt sich durch Herausziehen der Gegenlagerachse aus dem Einführungsschlitz und dadurch bewirktes Verschwenken des Verriegelungselements erreichen. Vorzugsweise ist jedoch eine mit dem Verriegelungselement zusammenwirkende Entriegelungshandhabe vorgesehen, die vor dem Herausziehen der Gegenlagerachse aus dem Gegenlagerböckchen betätigt wird, wonach das Verschwenken der Sonnenblende zur Seitenscheibe hin zwanglos möglich ist. Vorteilhafterweise kann das Verriegelungselement wenigstens in der Verriegelungsstellung mittels einer Verrastung gehalten sein.

Gemäß einer Ausführungsform des erfindungsgemäßen Gegenlagerböckchens kann die Entriegelungshandhabe einstückig mit dem Verriegelungselement hergestellt sein und in der Verriegelungsstellung druckknopfartig aus dem Lagerkörper oder dem Arm herausragen, wobei am Verriegelungselement und am Lagerkörper oder dem Arm miteinander zusammenwirkende, das Verriegelungselement in der Verriegelungs- und in der Entriegelungsstellung haltende Rastvorsprünge angeordnet sein können, die aus einer an der in den Lagerkörper gerichteten Seite der Handhabe angeordneten Rastzunge und einem im Lagerkörper angeordneten Raststift bestehen können.

Gemäß einer weiteren Ausführungsform der Erfindung können die Rastvorsprünge aus unter winklig aneinanderstoßenden Anflächungen am Verriegelungselement und einer geraden oder nockenartig vorspringenden Gegenfläche am Lagerkörper oder umgekehrt bestehen, wobei sich die elastische Nachgiebigkeit der Anflächungen durch die Anordnung eines materialfreien Raumes im Bereich hinter den Anflächungen im Verriegelungselement vergrößern läßt.

Gemäß einer anderen Ausführungsform der Erfindung kann die Entriegelungshandhabe schwenkbar am Lagerkörper oder dem Arm angeordnet sein, in der Verriegelungsstellung druckknopfartig aus dem Lagerkörper oder dem Arm herausragen und mit Rastvorsprüngen an dem Verriegelungselement zusammenwirkende Verriegelungsvorsprünge aufweisen, wobei sich die Entriegelungshandhabe schwenkbar an einem von der Schwenkachse beabstandeten Auflager einseitig abstützen und über ein elastisches Zwischenglied in eine Ausnehmung im Verriegelungselement eingreifen kann, derart, daß die Flanken der Ausnehmung die Rastvorsprünge und beabstandete Vorsprünge an dem Zwischenglied die Verriegelungsvorsprünge bilden.

Eine Abwandlung dieser Ausführungsform kann darin bestehen, daß zwischen der Entriegelungshandhabe und dem Verriegelungselement ein eine gegensinnige Drehung bewirkendes Federelement angeordnet ist, das Verriegelungselement einen in eine Ausnehmung der Entriegelungshandhabe eingreifenden Rastvorsprung aufweist, der in der Verriegelungsstellung auf einem zu einer Flanke der Ausnehmung benachbarten Vorsprung an der Entriegelungshandhabe aufliegt und in der Entriegelungsstellung in die Ausnehmung eingreift und an der entgegengesetzten Flanke anliegt.

Bei einer weiteren Ausführungsform des erfindungsgemäßen Gegenlagerböckchens kann das Verriegelungselement mit einem im Lagerkörper verschiebbar angeordneten Gleitstück bewegungsgekoppelt sein und die Entriegelungshandhabe am Gleitstück angreifen. Hierbei läßt sich die Bewegungskopplung durch ein Zahnsegment am Verriegelungselement und ein damit zusammenwirkendes Zahnstangenelement am Gleitstück bewirken. Das Gleitstück kann in Richtung der Entriegelungsstellung federbeaufschlagt sein, was sich bevorzugterweise dadurch bewirken läßt, daß die Entriegelungshandhabe druckknopfartig aus dem Lagerkörper herausragt und mit einem Rastvorsprung in einer Rastausnehmung des Gleitstücks eingreift, wobei das Gleitstück einen Lagerbock für das Verriegelungselement übergreift, die Entriegelungshandhabe in einer Schrägführung am Lagerbock geführt ist, seitliche, mit Rastausnehmungen am Gleitstück zusammenwirkende Rastvorsprünge aufweist und eine Druckfeder zwischen dem Gleitstück und der Entriegelungshandhabe angeordnet ist.

Um die Lücke zwischen der Entriegelungshandhabe und der Karosseriefläche zu schließen, kann an der Entriegelungshandhabe eine elastisch verformbare, mit einem freien Ende in eine Ausnehmung der Karosseriefläche eingreifende Zunge vorgesehen sein.

Die Erfindung wird nachstehend anhand von sechs in der Zeichnung dargestellten Ausführungsbeispielen des näheren erläutert. In der Zeichnung zeigen:
- Fig. 1: eine perspektivische Darstellung des erfindungsgemäßen Gegenlagerböckchens und einen Teilbereich einer Sonnenblende mit Gegenlagerachse,
- Fig. 2: einen Schnitt entlang der Linie II- II in Fig. 3 in der Verriegelungsstellung,
- Fig. 3: einen Schnitt entlang der Linie III - III in Fig. 4,
- Fig. 4: einen Schnitt durch das Gegenlagerböckchen entlang der Linie IV - IV in Fig. 3 in der entriegelten Stellung,
- Fig. 5: eine Darstellung entsprechend Fig. 2 einer zweiten Ausführungsform in der Verriegelungsstellung,
- Fig. 6: eine Schnittdarstellung entsprechend Fig. 4 in der Entriegelungsstellung,
- Fig. 7: eine der Fig. 2 entsprechende Schnittdarstellung entsprechend einer dritten Ausführungsform in der Verriegelungsstellung,
- Fig. 8: eine entsprechende Darstellung in der Entriegelungsstellung,
- Fig. 9: eine perspektivische, auseinandergezogene Darstellung eines Gegenlagerböckchens gemäß einer vierten Ausführungsform,
- Fig. 10: eine Schnittdarstellung entsprechend Fig. 2 in der Verriegelungsstellung,
- Fig. 11: eine entsprechende Darstellung in der Entriegelungsstellung,
- Fig. 12: eine Schnittdarstellung einer weiteren Ausführungsform in der Entriegelungsstellung,
- Fig. 13: eine Schnittdarstellung des Gegenlagerböckchens gemäß Fig. 12 in der Verriegelungsstellung,
- Fig. 14: eine Schnittdarstellung einer weiteren Ausführungsform des erfindungsgemäßen Gegenlagerböckchens in der Verriegelungsstellung und
- Fig. 15: eine Schnittdarstellung des Gegenlagerböckchens gemäß Fig. 14 in der Entriegelungsstellung.

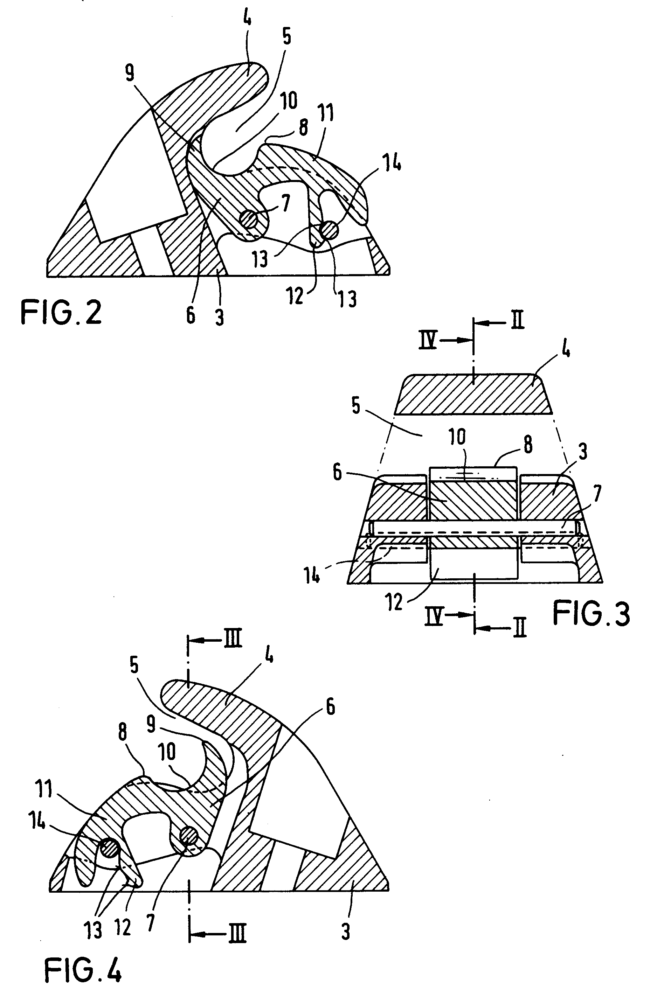

Von einer Fahrzeugsonnenblende ist nur ein Sonnenblendenteilbereich 1 mit einer Gegenlagerachse 2 dargestellt. Diese Gegenlagerachse 2 wirkt mit einem Gegenlagerböckchen zusammen, das aus einem an einer Karosseriefläche befestigbaren Lagerkörper 3 mit einem Arm 4 und dadurch gebildeten Einführungsschlitz 5 besteht. Ein Verriegelungselement 6 für die Gegenlagerachse 2 ist um eine Schwenkachse 7, z. B. einen Stift, im Lagerkörper 3 schwenkbar gelagert und weist einen Verriegelungsvorsprung 8 sowie einen Verriegelungsanschlag 9 beiderseits einer Ausnehmung 10 auf. Mit dem Verriegelungselement 6 ist einstückig eine Entriegelungshandhabe 11 gebildet, die in der in Fig. 2 gezeigten Verriegelungsstellung druckknopfartig aus dem Lagerkörper 3 herausragt. Eine Rastzunge 12 ist an der Entriegelungshandhabe 11 angeformt und liegt an einem durch den Lagerkörper 3 gesteckten oder mit diesem einstückig geformten Stift federnd an, wobei Rastvorsprünge 13 an der Rastzunge 12 die in Fig. 2 dargestellte Verriegelungsstellung und die in Fig. 3 dargestellte Entriegelungsstellung bestimmen.

In der in Fig. 2 dargestellten Verriegelungsstellung wird die Gegenlagerachse 2 in der Ausnehmung 10 durch den Verriegelungsvorsprung 8 am Verriegelungselement 6 gehalten und läßt sich aus dem Einführungsschlitz 5 erst herausziehen, wenn die Entriegelungshandhabe 11 in die in Fig. 4 dargestellte Stellung gedrückt wird, wodurch der Verriegelungsvorsprung 8 absinkt und den Einführungsschlitz 5 nicht mehr versperrt. Nunmehr läßt sich die Gegenlagerachse 2 zwanglos aus dem Einführungsschlitz 5 herausziehen, so daß sich die Sonnenblende ohne weiteres zur Seitenscheibe hin verschwenken läßt.

Soll die Gegenlagerachse 2 wieder in das Gegenlagerböckchen eingerastet werden, wird die Gegenlagerachse 2 in den Einführungsschlitz 5 eingeführt, bis sie am Verriegelungsanschlag 9 anliegt. Wird dann ein geringer zusätzlicher Druck ausgeübt, schwenkt das Verriegelungselement 6 in die in Fig. 2 dargestellte Stellung zurück und verriegelt die Gegenlagerachse im Einführungsschlitz 5 durch den Verriegelungsvorsprung 8.

Die Gegenlagerachse 2 ist in dieser Stellung klapperfrei im Lagerkörper 3 gehalten und kann sich aus dieser Stellung nicht von selbst lösen. Dennoch ist das Ausschwenken problemlos möglich, da sich die Entriegelung durch einfachen Fingerdruck auf die Entriegelungshandhabe 11 bewerkstelligen läßt.

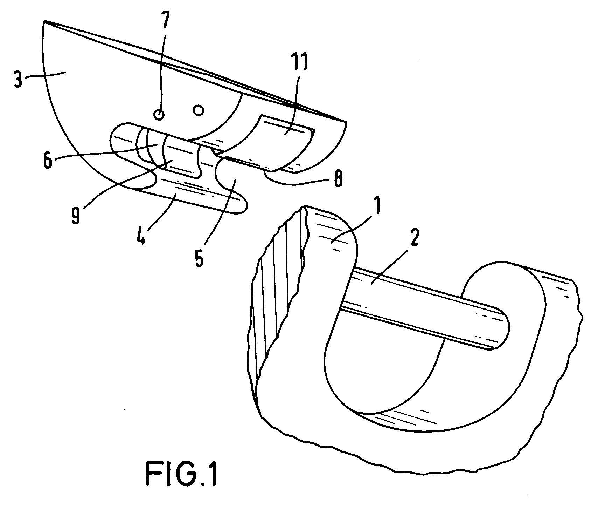

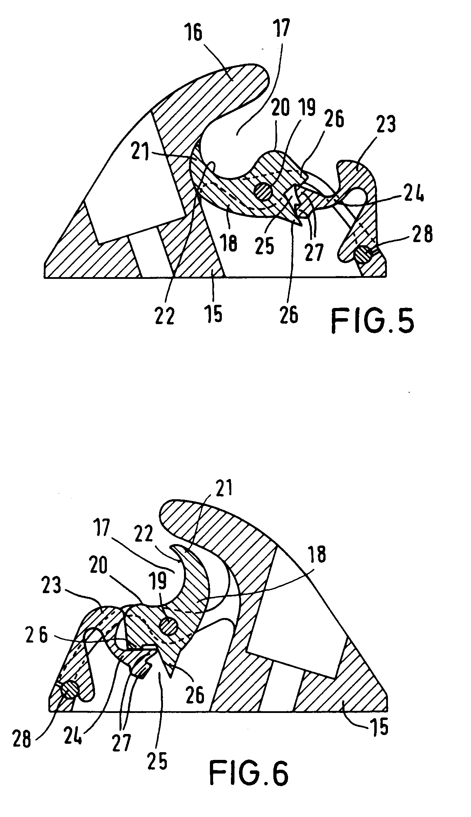

Die Ausführungsformen gemäß Fig. 5, 6 und 7, 8 unterscheiden sich von der Ausführungsform gemäß Fig. 1 bis 4 dadurch, daß das Verriegelungselement und die Entriegelungshandhabe zweiteilig gestaltet sind.

Bei der Ausführungsform gemäß Fig. 5, 6 ist ein Lagerkörper 15 mit einem Arm 16 und einem dazwischen angeordneten Einführungsschlitz 17 vorhanden, wobei das Verriegelungselement 18 um eine Schwenkachse 19 schwenkbar gelagert ist. Das Verriegelungselement 18 weist einen Verriegelungsvorsprung 20 sowie einen Verriegelungsanschlag 21 auf, die die Flanken einer Ausnehmung 22 bilden.

Die Entriegelungshandhabe 23 ist mit einem elastischen Zwischenglied 24 versehen, das mit quer beabstandeten Verriegelungsvorsprüngen 27 in eine Ausnehmung 25 am Verriegelungselement 18 ragt. Die Flanken der Ausnehmung 25 bilden Rastvorsprünge 26. Die Entriegelungshandhabe 23 stützt sich einseitig an einem Auflager 28 am Lagerkörper 15 ab. Dieses Auflager 28 ist im dargestellten Ausführungsbeispiel durch einen eingesteckten Stift gebildet, kann jedoch auch an den Lagerkörper 15 angeformt sein.

In der in Fig. 5 dargestellten Stellung ist der Einführungsschlitz 17 durch den Verriegelungsvorsprung 20 verengt, so daß ein sich im Einführungsschlitz 17 in Anlage an die Ausnehmung 22 befindlicher Gegenlagerstift gehalten wird. Die Entriegelungshandhabe 23 ragt druckknopfartig aus dem Lagerkörper 15 hervor. Wird nun die Entriegelungshandhabe 23 durch Fingerdruck in die in Fig. 6 dargestellte Lage gebracht, wird das Verriegelungselement 18 entriegelt und schwenkt in die in Fig. 6 dargestellte Lage, in der der Verriegelungsvorsprung 20 eingeschwenkt ist, während der Verriegelungsanschlag 21 in Richtung zur Öffnung des Einführungsschlitzes 17 geschwenkt ist und dabei die Gegenlagerachse vorschiebt und freigibt.

Zum Einführen und Verriegeln der Gegenlagerachse genügt es, sie mit leichtem Druck gegen die Ausnehmung 22 zu führen, wodurch der Verriegelungsanschlag 21 und das ganze Verriegelungselement geschwenkt werden und in die in Fig. 5 dargestellte Stellung gelangen.

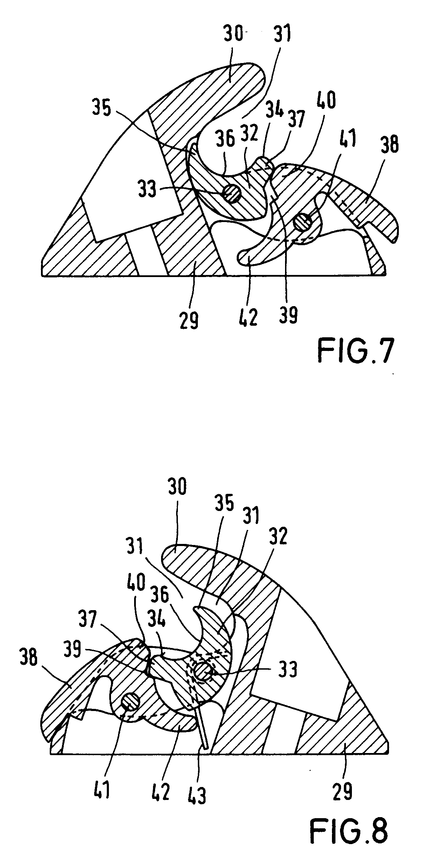

Bei der in Fig. 7 und 8 dargestellten Ausführungsform ist der Lagerkörper 29 mit seinem Arm 30 und dem Einführungsschlitz 31 ähnlich wie bei den Ausführungsformen gemäß Fig. 1 bis 6 geformt. Das Verriegelungselement 32 ist um eine Schwenkachse 33 in Form eines eingesetzten Stiftes schwenkbar im Lagerkörper 29 angeordnet und weist einen Verriegelungsvorsprung 34 sowie einen Verriegelungsanschlag 35, die beiderseits der Ausnehmung 36 angeordnet sind, auf. Der Verriegelungsvorsprung 34 geht in einen Rastvorsprung 37 über, der in der in Fig. 7 dargestellten, verriegelten Stellung auf einem Vorsprung 40 an der Entriegelungshandhabe 38 aufliegt. Die Entriegelungshandhabe 38 ist mittels eines Stiftes 41, der die Schwenkachse bildet, im Lagerkörper 29 gelagert und ragt druckknopfartig aus diesem hervor. Eine Ausnehmung 39 an der Entriegelungshandhabe 38 dient zur Aufnahme des Rastvorsprungs 37 in der entriegelten Stellung, die in Fig. 8 dargestellte ist. An einem Fortsatz 42 der Entriegelungshandhabe 38 stützt sich ein Federelement 43 in Form einer Schenkelfeder ab, die mit ihren Windungen auf die Schwenkachse 33 aufgesteckt ist und sich mit ihrem anderen Schenkel am Verriegelungselement 32 so abstützt, daß das Verriegelungselement 32 und die Entriegelungshandhabe 38 durch die Feder in entgegengesetzter Richtung gegeneinander verdreht werden. Dies bewirkt, daß bei einem Betätigen der Entriegelungshandhabe 38 das Verriegelungselement 32 schlagartig in die in Fig. 8 dargestellte Stellung gedreht wird, sobald der Rastvorsprung 37 am Vorsprung 40 vorbei in den Bereich der Ausnehmung 39 gelangt ist. Dadurch gibt der Verriegelungsvorsprung 37 die Öffnung des Einführungsschlitzes 31 frei und die verriegelte Gegenlagerachse läßt sich aus dem Einführungsschlitz 31 herausbewegen.

Um die Gegenlagerachse in dem Einführungsschlitz 31 wieder zu verriegeln, genügt es, die Gegenlagerachse gegen den Verriegelungsanschlag 38 und das Verriegelungselement 32 in die in Fig. 7 dargestellte Stellung zu bewegen. Aufgrund der Wirkung des Federelementes 43 hat die Entriegelungshandhabe 38 das Bestreben, sich entgegengesetzt zu dem Verriegelungselement 32 zu drehen, was in dem Moment möglich ist, in dem der Rastvorsprung 37 aus der Ausnehmung 39 herausgehoben ist, so daß sich der Vorsprung 40 unter den Rastvorsprung 37 schieben kann und das Verriegelungselement 32 wieder in der verriegelten Stellung festhält.

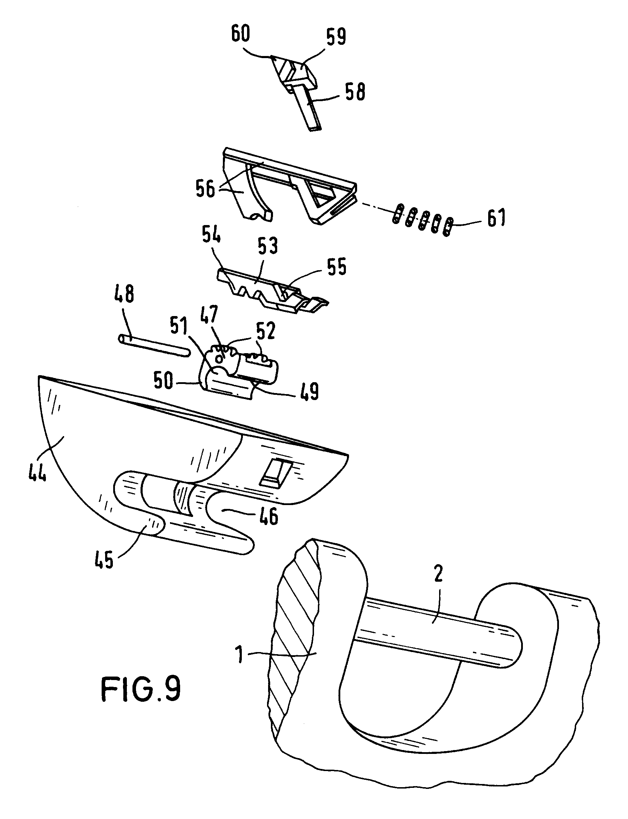

Bei der Ausführungsform gemäß Fig. 9 bis 11 weist der Lagerkörper 44 wiederum den Arm 45 und den Einführungsschlitz 46 auf. Das Verriegelungselement 47 ist mittels eines Stifts 48 als Schwenkachse schwenkbar im Lagerkörper 48 gelagert. Der Stift 48 braucht kein getrenntes Bauteil zu sein, sondern kann auch am Verriegelungselement 47 angeformt sein.

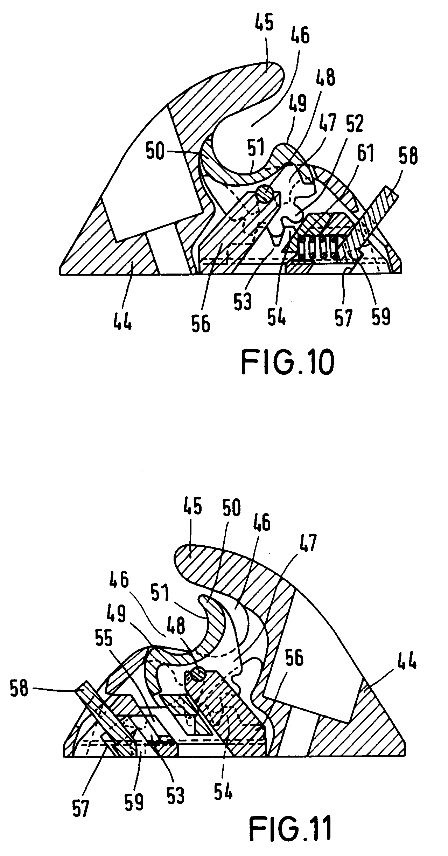

Das Verriegelungselement 47 weist den üblichen Verriegelungsvorsprung 49, den Verriegelungsanschlag 50 und die dazwischen gebildete Ausnehmung 51 auf. Zum Verschwenken des Verriegelungselements 47 ist dieses mit einem Zahnsegmentpaar 52 versehen, das mit einem entsprechenden Zahnstangenelementenpaar 54 an einem Gleitstück 53 in Eingriff steht. Zwei Verlängerungen der Zahnstangenelemente 54 sind mit Rastausnehmungen 55 versehen. Das Gleitstück 53 übergreift einen Lagerbock 56, der einerseits zur Unterstützung und Halterung des Verriegelungselementes 47 und andererseits zur Führung für einen blockartigen Gleitschuh 59 in einer Schrägführung 57 dient. Am Gleitschuh 59 ist eine Entriegelungshandhabe in Form eines Zapfens 58 befestigt, die druckknopfartig aus dem Lagerkörper 44 herausragt. Seitlich am Gleitschuh 59 sind Rastvorsprünge 60 angeordnet, die mit den Rastausnehmungen 55 am Gleitstück 53 zusammenwirken. Zwischen dem Gleitstück 53 und dem Gleitschuh 59 ist eine Druckfeder 61 angeordnet, die das Bestreben hat, das Gleitstück 53 zu verschieben. Solange sich indessen der Gleitschuh 59 in der in Fig. 10 dargestellten Stellung befindet, läßt sich das Gleitstück 53 nicht verschieben, da die Rastvorsprünge 60 am Gleitschuh 59 in die Rastausnehmungen 55 des Gleitstücks 53 eingreifen. In dieser Stellung ragt der Verriegelungsvorsprung 59 in den Bereich des Einführungsschlitzes 46 hinein und verschließt ihn bereichsweise, so daß ein darin angeordneter Gegenlagerstift festgehalten wird. Wird nun der Zapfen 58 durch Fingerdruck in den Lagerkörper 44 eingedrückt, so daß er in die in Fig. 11 dargestellte Stellung gelangt, geben die Rastvorsprünge 60 das Gleitstück 53 frei, das sich unter der Wirkung der Druckfeder 61 verschiebt und über die Zahnstangenelemente 54 und die Zahnsegmente 52 das Verriegelungselement 47 in die in Fig. 11 dargestellte Stellung verdreht. In dieser Stellung ist der Verriegelungsvorsprung 49 aus dem Bereich des Einführungsschlitzes 46 herausbewegt und die Gegenlagerachse läßt sich aus dem Einführungsschlitz 46 herausbewegen.

Soll die Gegenlagerachse wieder im Einführungsschlitz 46 verriegelt werden, wird sie gegen den Verriegelungsanschlag 50 gedrückt, wodurch sich das Verriegelungselement 47 dreht. Dies nimmt über die Zahnsegmente 52 und die Zahnstangenelemente 54 das Gleitstück 53 mit, und die Rastvorsprünge 60 gelangen wieder in den Bereich der Rastausnehmungen 55, wobei der Gleitschuh 59 in der Schrägführung 57 durch die Druckfeder 61 in die in Fig. 10 dargestellte Stellung verschoben wird und dabei das Gleitstück 53 wieder verriegelt.

Sämtliche Teile des erfindungsgemäßen Gegenlagerböckchens lassen sich mit Ausnahme der Federn 43 und 61 aus Kunststoff herstellen. Auch die Stifte 7, 14, 19, 28, 33, 41, 48 lassen sich an den Lagerkörper 3, 15, 29, 44, das Verriegelungselement 6, 18, 32, 47 und/oder die Entriegelungshandhabe 28, 38, anformen, insbesondere wenn der Lagerkörper 3, 15, 29, 44 in einer senkrechten Ebene geteilt ausgeführt und nach der Montage der Einzelteile verklebt oder verschweißt wird.

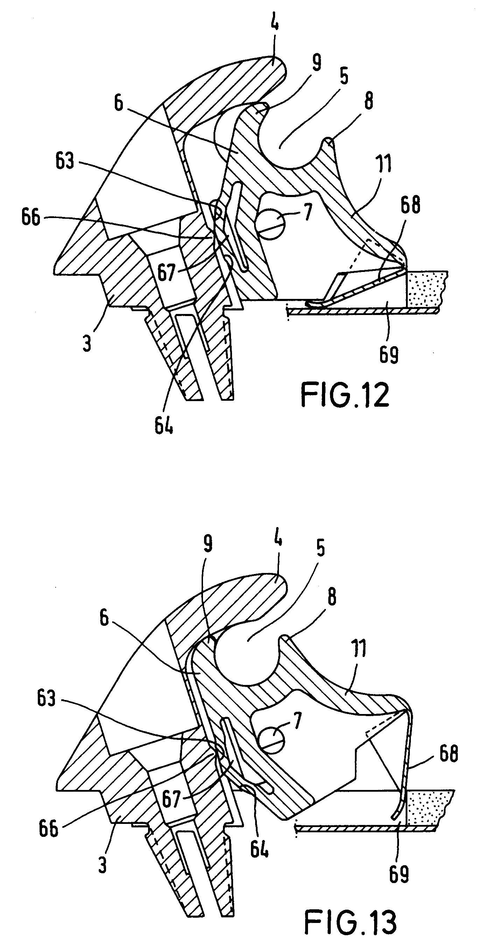

Bei der in Fig. 12 und 13 dargestellten Ausführungsform ist der Lagerkörper 3 im wesentlichen, wie in Fig. 2 und 4 dargestellt, gestaltet. Für die verrastung in der in Fig. 12 dargestellten Entriegelungsstellung und in der in Fig. 13 dargestellten Verriegelungsstellung weist das Verriegelungselement 6 winklig, vorzugsweise unter einem stumpfen Winkel aneinanderstoßende Anflächungen 63, 64 auf, die mit einer nockenartig vorspringenden Gegenfläche 66 am Lagerkörper 3 zusammenwirken. Zur Erhöhung der elastischen Verformbarkeit der Anflächungen 63, 64 ist im Verriegelungselement 6 ein materialfreier Raum 67 vorgesehen.

In der in Fig. 12 dargestellten Entriegelungsstellung liegt die Anflächung 64 an der nockenartig vorspringenden Gegenfläche 66 an, wobei das Verriegelungselement 6 hinter den Anflächungen 63, 64 in der dargestellten Entriegelungsstellung gehalten wird. Umgekehrt liegt in der in Fig. 13 dargestellten Verriegelungsstellung die Anflächung 63 an der nockenartig vorspringenden Gegenfläche 66 an und hält das Verriegelungselement 6 in dieser Stellung fest. Beim Übergang von der einen in die andere Stellung werden die Anflächungen 63, 64 elastisch verformt und weichen in den materialfreien Raum 67 elastisch zurück, bis die jeweilige Endstellung erreicht ist. In dieser Stellung nehmen sie wieder die dargestellte Lage ein und bilden die Verriegelung für das Verriegelungselement. Eine elastisch verformbare Zunge 68 ist mit der Entriegelungshandhabe 11 mittels eines Filmscharniers verbunden und ragt in eine Ausnehmung 69 in der Karosseriefläche. Auf diese Weise wird die Lücke zwischen der Karosseriefläche und der Entriegelungshandhabe 11 in der Verriegelungsstellung in der in Fig. 13 dargestellten Weise verdeckt.

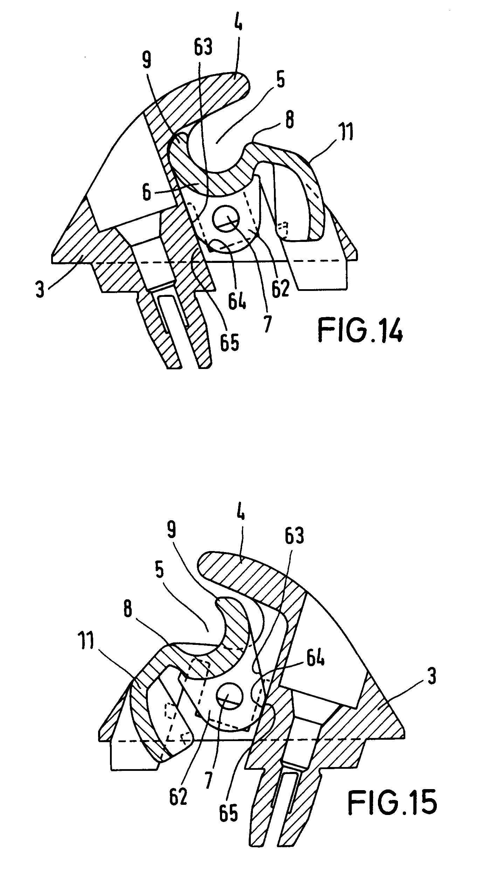

Die Ausführungsform gemäß Fig. 14 und 15 unterscheidet sich von der gemäß Fig. 12 und 13 dadurch, daß das Verriegelungselement 6 einen Lagervorsprung 62 für die Schwenkachse 7 aufweist. An diesem Lagervorsprung 62 sind unter einem stumpfen Winkel aneinanderstoßende Anflächungen 63, 64 angeordnet, die mit einer gerade Gegenfläche 65 am Lagerkörper 3 zusammenwirken. Die Wirkungsweise ist bei dieser Ausführungsform grundsätzlich dieselbe wie die bei der Ausführungsform gemäß Fig. 12 und 13, jedoch beruht hier die Verriegelung und Entriegelung auf der elastischen Verformbarkeit des Lagerkörpers 3 des Verriegelungselements 6 und der Schwenkachse 7, so daß hier erhöhte Anforderungen an die Herstellungsgenauigkeit gegeben sind.

## Patentansprüche

1. Gegenlagerböckchen für eine Gegenlagerachse einer Fahrzeugsonnenblende mit einem an einer Karosseriefläche befestigbaren Lagerkörper (3, 15, 29, 44), einem zwischen einem Arm (4, 16, 30, 45) am Lagerkörper (3, 15, 29, 44) und dem Lagerkörper (3, 15, 29, 44) gebildeten Einführungsschlitz (5, 17, 31, 46) für die Gegenlagerachse (2) und einem um eine zum Einführungsschlitz (5, 17, 31, 46) beabstandete Achse zwischen einer Verriegelungs- und Entriegelungsstellung schwenkbaren Verriegelungselement (6, 18, 32, 47) dadurch gekennzeichnet, daß das Verriegelungselement (6, 18, 32, 47) für die Gegenlagerachse (2) um die zum Einführungsschlitz (5, 17, 31, 46) beabstandete Schwenkachse (7, 19, 33, 48) im Lagerkörper (3, 15, 29, 44) schwenkbar gelagert ist und daß am Verriegelungselement (6, 18, 32, 47) ein den Einführungsschlitz (5, 17, 31, 46) in der Verriegelungsstellung wenigstens bereichsweise verschließender, die Gegenlagerachse (2) in der Entriegelungsstellung freigebender Verriegelungsvorsprung (8, 20, 34, 49) vorgesehen ist.

2. Gegenlagerböckchen nach Anspruch 1, **dadurch gekennzeichnet,** daß das Verriegelungselement (6, 18, 32, 47) eine der Gegenlagerachse (2) angepaßte, entgegengesetzt zur Schwenkachse (7, 19, 33, 48) offene Ausnehmung (10, 22, 36, 51) aufweist, deren eine Flanke den Verriegelungsvorsprung (8, 20, 34, 49) und deren andere Flanke einen Verriegelungsanschlag (9, 21, 35, 50) bildet.

3. Gegenlagerböckchen nach Anspruch 1 oder 2, **gekennzeichnet durch** eine mit dem Verriegelungselement (6, 18, 32, 47) zusammenwirkende Entriegelungshandhabe (11, 23, 37, 58, 59).

4. Gegenlagerböckchen nach Anspruch 1, 2 oder 3, **gekennzeichnet durch** eine Verrastung (13, 14; 26, 27; 37, 40; 55, 60) des Verriegelungselements (6, 18, 32, 47) wenigstens in der Verriegelungsstellung.

5. Gegenlagerböckchen nach einem oder mehreren der Ansprüche 1 bis 4, **dadurch gekennzeichnet,** daß die Entriegelungshandhabe (11) einstückig mit dem Verriegelungselement (6) hergestellt ist und in der Verriegelungsstellung druckknopfartig aus dem Lagerkörper (3) oder dem Arm (4) herausragt.

6. Gegenlagerböckchen nach Anspruch 5, **dadurch gekennzeichnet,** daß am Verriegelungselement (6) und am Lagerkörper (3) oder dem Arm (4) miteinander zusammenwirkende, das Verriegelungselement (6) in der Verriegelungs- und in der Entriegelungsstellung haltende Rastvorsprünge (12, 13, 14) angeordnet sind.

7. Gegenlagerböckchen nach Anspruch 6, **dadurch gekennzeichnet,** daß die Handhabe (6) an der in den Lagerkörper (3) gerichteten Seite eine mit einem im Lagerkörper (3) angeordneten Raststift (14) zusammenwirkende Rastzunge (12) aufweist.

8. Gegenlagerböckchen nach einem oder mehreren der Ansprüche 1 bis 4, **dadurch gekennzeichnet,** daß die Entriegelungshandhabe (23, 38) schwenkbar am Lagerkörper (15, 29) oder dem Arm (16, 30) angeordnet ist, in der Verriegelungsstellung druckknopfartig aus dem Lagerkörper (15, 29) oder dem Arm (16, 30) herausragt und mit Rastvorsprüngen (26, 37) an dem Verriegelungselement (18, 32) zusammenwirkende Verriegelungsvorsprünge (27, 40) aufweist.

9. Gegenlagerböckchen nach Anspruch 8, **dadurch gekennzeichnet,** daß sich die Entriegelungshandhabe (23) schwenkbar an einem von der Schwenkachse (19) beabstandeten Auflager (28) einseitig abstützt und über ein elastisches Zwischenglied (24) in eine Ausnehmung (25) im Verriegelungselement (18) eingreift, wobei die Flanken der Ausnehmung (25) die Rastvorsprünge (26) und beabstandete Vorsprünge (27) an dem Zwischenglied (24) die Verriegelungsvorsprünge bilden.

10. Gegenlagerböckchen nach Anspruch 8, **dadurch gekennzeichnet,** daß zwischen der Entriegelungshandhabe (38) und dem Verriegelungselement (32) ein eine gegensinnige Drehung bewirkendes Federelement (43) angeordnet ist, das Verriegelungselement (32) einen in eine Ausnehmung (39) der Entriegelungshandhabe (38) eingreifenden Rastvorsprung (37) aufweist, der in der Verriegelungsstellung auf einem zu einer Flanke der Ausnehmung (39) benachbarten Vorsprung (40) an der Entriegelungshandhabe (38) aufliegt und in der Entriegelungsstellung in die Ausnehmung (39) eingreift und an der entgegengesetzten Flanke anliegt.

11. Gegenlagerböckchen nach einem oder mehreren der Ansprüche 1 bis 4, **dadurch gekennzeichnet,** daß das Verriegelungselement (47) mit einem im Lagerkörper (44) verschiebbar angeordneten Gleitstück (53) bewegungsgekoppelt ist und die Entriegelungshandhabe (58, 59) am Gleitstück (53) angreift.

12. Gegenlagerböckchen nach Anspruch 11, **dadurch gekennzeichnet,** daß das Verriegelungselement (47) ein Zahnsegment (52) und das Gleitstück (53) ein damit zusammenwirkendes Zahnstangenelement (54) aufweisen.

13. Gegenlagerböckchen nach Anspruch 12, **dadurch gekennzeichnet,** daß das Gleitstück (53) in Richtung der Entriegelungsstellung federbeaufschlagt ist.

14. Gegenlagerböckchen nach Anspruch 11, 12 oder 13, **dadurch gekennzeichnet,** daß die Entriegelungshandhabe (58, 59) druckknopfartig aus dem Lagerkörper (44) herausragt und mit einem Rastvorsprung (60) in eine Rastausnehmung (55) des Gleitstücks (53) eingreift.

15. Gegenlagerböckchen nach den Ansprüchen 11 bis 14, **dadurch gekennzeichnet,** daß das Gleitstück (53) einen Lagerbock (56) für das Verriegelungselement (47) übergreift, die Entriegelungshandhabe (58, 59) in einer Schrägführung (57) am Lagerbock (56) geführt ist, seitliche, mit Rastausnehmungen (55) am Gleitstück (53) zusammenwirkende Rastvorsprünge (60) aufweist und eine Druckfeder (1) zwischen dem Gleitstück (53) und der Entriegelungshandhabe (58, 59) angeordnet ist.

16. Gegenlagerböckchen nach Anspruch 6, **dadurch gekennzeichnet,** daß die Rastvorsprünge aus unter winklig, vorzugsweise einem stumpfen Winkel, aneinanderstoßenden Anflächungen (63, 64) am Verriegelungselement (6) und einer geraden oder nockenartig vorspringenden Gegenfläche (63, 66) am Lagerkörper (3) oder umgekehrt bestehen.

17. Gegenlagerböckchen nach Anspruch 16, **dadurch gekennzeichnet,** daß das Verriegelungselement im Bereich hinter den Anflächungen (63, 64) einen materialfreien, die elastische Nachgiebigkeit der Anflächungen (63, 64) vergrößernden Raum (67) aufweist.

18. Gegenlagerböckchen nach einem oder mehreren der Ansprüche 1 bis 17, **dadurch gekennzeichnet,** daß an der Entriegelungshandhabe (11) eine elastisch verformbare, mit einem freien Ende in eine Ausnehmung (69) der Karosseriefläche eingreifende und die Lücke zwischen der Entriegelungshandhabe (11) und der Karosseriefläche abdeckende Zunge (68) angeordnet ist.

## Claims

1. An end-support stud for the end-support axle of a sun visor for vehicles with a support body (3, 15, 29, 44) fixed on a surface of the car body, an insertion slot (5, 17, 31, 46) for said end-support axle (2) positioned between an arm (4, 16, 30, 45) mounted on said support body (3, 15, 29, 44) and the support body (3, 15, 29, 44) itself and with a locking element (6, 18, 32, 47) pivotally mounted about an axle located at a distance from the insertion slot (5, 17, 31, 46)) from a locking to an unlocking position, **characterized in that** the locking element (6, 18, 32, 47) for the end-support axle (2) is pivotally mounted about the rotation axle (7, 19, 33, 48) located at a distance from the insertion slot (5, 17, 31, 46) supported in the support body (3, 15, 29, 44) and in that on the locking element (6, 18, 32, 47) is provided a locking projection (8, 20, 34, 49), which provides at least for a partial closure of the insertion slot (5, 17, 31, 46) in the locking position and sets free the end-support axle (2) in the unlocking position.

2. An end-support stud according to claim 1, **characterized in that** the locking element (6, 18, 32, 47) has a recess (10, 22, 36, 51) adapted to the end-support stud (2) and opened towards the opposite side of the inclination axle (7, 19, 33, 48), one flank of which forms the locking projection (8, 20, 34, 49) and the other flank forms a locking stop (9, 21, 35, 50).

3. An end-support stud according to claim 1 or 2, **characterized by** an unlocking handle (11, 23, 37, 58, 59), which interacts with the locking element (6, 18, 32, 47).

4. An end-support stud according to claim 1, 2 or 3, **characterized by** a detention (13, 14, 26, 27, 37, 40, 55, 60) of the locking element (6, 18, 32, 47), at least in the locking position.

5. An end-support stud according to claims 1 - 4, **characterized in that** the unlocking handle (11) is integrally provided with the locking element (6) and in the locking position protrudes like a push-button from the support body (3) or the arm (4).

6. An end-support stud according to claim 5, **characterized in that** on the locking element (6) and on the support body (3) or on the arm (4) are disposed interacting detent projections (12, 13, 14), which keep the locking element (6) in the locking position and inthe unlocking position.

7. An end support stud according to claim 6, **characterized in that** the handle (6) on the side oriented towards the support body (3) has a detent tongue interacting with a detent pin, which is located inside the support body (3).

8. An end-support stud according to one or more of the claims 1 to 4, **characterized in that** the unlocking handle (23, 38) is pivotally mounted on the support body (15, 29) or the arm (16, 30), protrudes in the locking position like a push-button from the support body (15, 29) or the arm (16, 30) being provided with locking projections (27, 40), which interact with the detent projections (26, 37) on the locking element (18, 32).

9. An end-support stud according to claim 8, **characterized in that** the unlocking handle (23) is inclinable and supported on one side by a bearing (28), which is placed at a distance from the inclination axle (19), and is introduced by means of an elastic joint (24) into a recess (25) in the locking element (18), the flanks of the recess (25) forming the detent projections (26) and the spaced projections (27) on the joint (24) forming the locking projections.

10. An end-support stud according to claim 8, **characterized in that** between the unlocking handle (38) and the locking element (32) is interposed a spring element (43), which causes a counterclockwise rotation, the locking element (32) is provided with a detent projection (37), which is introduced into a recess (39) of the unlocking handle (38), which in the locking position is supported by a projection (40) on the unlocking handle (38) near the flank of the recess (39) and which in the unlocking position interacts with the recess (39) and rests on the opposite flank.

11. An end-support stud according to one or more of the claims 1 to 4, **characterized in that** the locking element (47) is coupled with a movable sliding piece (53) in the support body (44) and the unlocking handle (58, 59) interacts with the sliding piece (53).

12. An end-support stud according to claim 11, **characterized in that** the locking element (47) is provided with a toothed segment (52) and in that the sliding piece (53) is provided with an interacting rack element (54).

13. An end-support stud according to claim 12, **characterized in that** the sliding piece (53) is spring-loaded in the direction of the unlocking position.

14. An end-support stud according to claim 11, 12 or 13, **characterized in that** the unlocking handle (58,59) protrudes in the manner of a button from the support body (44) and interacts by means of a detent projection (60) with a detent recess (55) of the sliding piece (53).

15. An end-support stud according to claims 11 - 14, **characterized in that** the sliding piece (53) overlaps with a support rack (56) of the locking element (47), the unlocking device (58,59) moves in an inclined guide (57) on the support rack (56), is provided with lateral recess projections (60) which interact with detent recesses (55) on the sliding piece (53) and a compression spring (1) is interposed between the sliding piece (53) and the unlocking handle (58,59).

16. End-support stud according to claim 6, **characterized in that** the detent projections consist of faces (63,64), which preferably in an obtuse angle border the unlocking element (6) and a straightforward or cam-like protruding counter-area (63,66) on the support body (1) or vice versa.

17. End-support stud according to claim 16, **characterized in that** in the zone behind the faces (63,64) the locking element has a material-free space (67), which increases the resilience of the areas (63,64).

18. An end-support stud according to one or more of the claims 1 - 17, **characterized in that** on the unlocking handle (11) there is provided an elastically deformable tongue (68), which with one free end is inserted into a recess (69) on the car body and covers the space between the unlocking handle (11) and the surface of the car body.

## Revendications

1. Bloc de contre-palier pour un axe de contre-palier d'un pare-soleil pour véhicules comprenant un corps support (3, 15, 29, 44) adapté à être fixé à une surface de carrosserie, ayant une fente d'introduction (5, 17, 31, 46) pour l'axe de contre-palier formée entre un bras (4, 16, 30, 45) sur le corps support (3, 15, 29, 44) et le corps support lui-même (3, 15, 29, 44) et un élément de verrouillage (6, 18, 32, 47) oscillant autour d'un axe d'oscillation espacé de la fente d'introduction (5, 17, 31, 46), entre une position de verrouillage et une position de déverrouillage, caractérisé en ce que l'élément de verrouillage (6, 18, 32, 47) pour l'axe de contre-palier (2) est supporté dans le corps support (3, 15, 29, 44) de manière oscillante autour de l'axe d'oscillation (7, 19, 33, 48) espacé de la fente d'introduction (5, 17, 31, 46), et en ce que sur l'élément de verrouillage (6, 18, 32, 47) on prévoit un relief de verrouillage (8, 20, 34, 49) qui, à sa position de verrouillage, bouche la fente d'introduction (5, 17, 31, 46) au moins en partie et, à sa position de déverrouillage, libère l'axe de contre-palier (2).

2. Bloc de contre-palier selon la revendication 1, caractérisé en ce que l'élément de verrouillage (6, 18, 32, 47) présente un évidement (10, 22, 36, 51) qui est adapté à l'axe de contre-palier (2) et est ouvert du côté opposé par rapport à l'axe d'oscillation (7, 19, 33, 48) et dont une aile forme le relief de verrouillage (8, 20, 34, 49) et l'autre aile forme une butée de verrouillage (9, 21, 35, 50).

3. Bloc de contre-palier selon la revendication 1 ou 2, caractérisé par une prise de déverrouillage (11, 23, 37, 58 et 59) coopérant avec l'élément de verrouillage (6, 18, 32, 47).

4. Bloc de contre-palier selon la revendication 1, 2 ou 3, caractérisé par un verrouillage (13, 14; 26, 27; 37, 40; 55, 60) de l'élément de verrouillage (6, 18, 32, 47) au moins à sa position de verrouillage.

5. Bloc de contre-palier selon une ou plusieurs des revendications 1 à 4, caractérisé en ce que la prise de déverrouillage (11) et l'élément de verrouillage (6) sont formés d'une seule pièce et la prise de déverrouillage (6) à sa position de verrouillage fait saillie en guise d'un poussoir du corps support (3) ou du bras (4).

6. Bloc de contre-palier selon la revendication 5, caractérisé en ce que des reliefs d'encliquetage (12, 13, 14) sont disposés sur l'élément de verrouillage (6) et sur le corps support (3) ou le bras (4), lesquels coopèrent les uns avec les autres et maintiennent l'élément de verrouillage (6) à sa position de verrouillage et à sa position de déverrouillage.

7. Bloc de contre-palier selon la revendication 6, caractérisé en ce que sur le côté tourné vers l'intérieur du corps support (3), la prise (6) présente une languette d'encliquetage (12) coopérant avec une cheville d'encliquetage (14) disposée dans le corps support (3).

8. Bloc de contre-palier selon une ou plusieurs des revendications 1 à 4, caractérisé en ce que la prise de déverrouillage (23, 38) est disposée de manière oscillante sur le corps support (15, 29) ou sur le bras (16, 30), à sa position de verrouillage fait saillie en guise de poussoir du corps support (15, 29) ou du bras (16, 30) et est munie de reliefs de verrouillage (27, 40) coopérant avec des reliefs d'encliquetage (26, 37) sur l'élément de verrouillage (18, 32).

9. Bloc de contre-palier selon la revendication 8, caractérisé en ce que la prise de déverrouillage (23) est supportée d'un côté de manière oscillante par un appui (28) espacé de l'axe d'oscillation (19) et s'engage, au moyen d'un élément intermédiaire à ressort (24), dans un évidement (25) dans l'élément de verrouillage (18), les ailes de l'évidement formant les reliefs d'encliquetage (26) et les reliefs espacés (27) sur l'élément intermédiaire (24).

10. Bloc de contre-palier selon la revendication 8, caractérisé en ce qu'entre la prise de déverrouillage (38) et l'élément de verrouillage (32) il y un élément à ressort lequel cause une rotation en sens opposé, et en ce que l'élément de verrouillage (32) présente un relief d'encliquetage (37) qui s'engage dans un évidement de la prise de déverrouillage (38), dans sa position de verrouillage prend appui sur un relief (40) sur la prise de déverrouillage (38) proche d'une aile de l'évidement (39), et dans sa position de déverrouillage s'engage dans l'évidement (39) et prend appui sur l'aile opposée.

11. Bloc de contre-palier selon une ou plusieurs des revendications 1 à 4, caractérisé en ce que l'élément de verrouillage (47) est accouplé, lors du mouvement, à une pièce de glissement (53) disposée dans le corps support (44) et susceptible de déplacement, et en ce que la prise de déverrouillage (58, 59) s'engage sur la pièce de glissement (53).

12. Bloc de contre-palier selon la revendication 11, caractérisé en ce que l'élément de verrouillage (47) présente un segment denté (52) et la pièce de glissement (53) est munie d'un élément en forme de tige dentée (54) coopérant avec celui-ci.

13. Bloc de contre-palier selon la revendication 12, caractérisé en ce que la pièce de glissement (53) est soumise à l'action d'un ressort dans la direction de la position de déverrouillage.

14. Bloc de contre-palier selon la revendication 11, 12 ou 13, caractérisé en ce que la prise de déverrouillage (58, 59) fait saillie en guise de poussoir du corps support (44) et s'engage avec un relief d'encliquetage (60) dans un évidement d'encliquetage (55) de la pièce de glissement (53).

15. Bloc de contre-palier selon les revendications 11 à 14, caractérisé en ce que la pièce de glissement (53) s'étend au-delà d'un support de palier (56) pour l'élément de verrouillage (47), en ce que la prise de déverrouillage (58, 59) est guidée dans un guidage incliné (57) sur le support de palier (56), et est munie de reliefs d'encliquetage (55) sur la pièce de glissement (53) et en ce qu'un ressort de compression est disposé entre la pièce de glissement (53) et la prise de déverrouillage (58, 59).

16. Bloc de contre-palier selon la revendication 6, caractérisé en ce que les reliefs d'encliquetage comportent des aplatissements (63, 64) sur l'élément de verrouillage (6) au contact l'un de l'autre de manière à former un angle, en particulier un angle obtus, et une contre-surface (63, 66) sur le corps support (3), plate ou faisant saillie en guise d'ergot, ou vice-versa.

17. Bloc de contre-palier selon la revendication 16, caractérisé en ce que dans la zone derrière les aplatissements (63, 64) l'élément de verrouillage présente un espace (67) dépourvu de matière, ce qui augmente la souplesse élastique des aplatissements (63, 64).

18. Bloc de contre-palier selon une ou plusieurs des revendications 1 à 17, caractérisé en ce qu'une languette (68) est disposée sur la prise de déverrouillage (11), laquelle languette est élastiquement déformable, s'engage par son extrémité libre dans un évidement (69) de la surface de la carrosserie et couvre la fente entre la prise de déverrouillage (11) et la surface de la carrosserie.
